# EUROPEAN PATENT SPECIFICATION

(11) **EP 3 797 854 B1**
(45) Date of publication and mention of the grant of the patent: **01.11.2023**
(21) Application number: 20158291.3
(22) Date of filing: 19.02.2020
(51) Int. Cl.: B01D 53/14, B01D 61/42, C25B 1/00, C25B 15/08, B01D 53/96, B01D 61/44

(54) **CARBON DIOXIDE REDUCTION SYSTEM AND CARBON DIOXIDE REDUCTION METHOD**
KOHLENDIOXIDREDUKTIONSSYSTEM UND KOHLENDIOXIDREDUKTIONSVERFAHREN
SYSTÈME ET PROCÉDÉ DE RÉDUCTION DE DIOXYDE DE CARBONE

(30) Priority: 27.09.2019 JP 2019176801
(43) Date of publication of application: 31.03.2021
(73) Proprietor: Mitsubishi Heavy Industries, Ltd., Tokyo 100-8332 (JP)
(72) Inventor: TSUJIUCHI, Tatsuya, Tokyo, 100-8332 (JP); TAJIMA, Hidehiko, Tokyo, 100-8332 (JP); HIRATA, Takuya, Tokyo, 100-8332 (JP); HORIZOE, Kouji, Tokyo, 100-8332 (JP)
(74) Representative: Henkel & Partner mbB

(56) References cited:
- EP-A1- 2 737 937
- EP-A1- 3 527 695
- CN-A- 108 970 334
- JP-A- 2015 199 042
- JP-B2- 6 011 238
- US-A1- 2015 139 878

## Description

### TECHNICAL FIELD

The present invention relates to a carbon dioxide reduction system and a carbon dioxide reduction method.

### BACKGROUND

Conventionally, carbon monoxide is produced from fossil fuels. When natural gas is used as a source of carbon monoxide, the natural gas is reformed with steam to obtain a mixed gas of carbon monoxide and hydrogen, and this mixed gas is further used as a source of various chemical products. On the other hand, when fossil fuels are burned in a variety of plants, a large amount of carbon dioxide is produced, which is one cause of global warming. Under such circumstances, attention is focused on recovering and effectively using carbon dioxide, or on converting carbon dioxide into a valuable resource.

As examples of the method of converting carbon dioxide into a valuable resource, there may be mentioned reforming of natural gas with carbon dioxide, electrochemical reduction, and photo-electrochemical reduction using light energy. Among them, the technique of converting carbon dioxide into a valuable resource by electrochemical reduction is disclosed in Patent Document 1. In the case of electrochemically reducing carbon dioxide, carbon dioxide can be reduced into a valuable resource by applying electrical power to an electrolytic cell. However, this requires a large amount of electric power. Therefore, use of electric power generated by renewable energy has been studied in recent years. In the electrochemical reduction of carbon dioxide, besides the requirement of a large amount of electric power, there remains a problem of maintaining stable performance.

Patent Document 2 discloses an apparatus and a method that make it possible to cheaply and energy-efficiently capture carbon dioxide from carbon dioxide-containing gas streams and electrochemically reduce the captured carbon dioxide from a carbon dioxide-rich capture solvent such as an aqueous amine solution or an aqueous alkanolamine solution at elevated absolute pressure and temperatures above 0°C. The apparatus comprises an absorber unit, an electrochemical cell connected to the absorber unit, and optionally a stripper unit or/and a separation unit connected to the electrochemical cell, wherein the electrochemical cell reduces carbon dioxide from the capture solvent and comprises at least two compartments separated by a semipermeable separator. The absolute pressure within the absorber unit and the electrochemical cell is from 1 to 200 bar.

Patent Document 3 discloses a carbon dioxide recovery device and a carbon dioxide recovery method that are capable of stably regenerating an absorption liquid that has absorbed carbon dioxide while reducing energy required for regenerating the absorption liquid that has absorbed carbon dioxide, wherein the absorption liquid is an amine-based aqueous solution containing an amino group-containing compound and water. The carbon dioxide recovery device comprises, among others, an absorption tower, an electrolysis/regeneration unit and a gas-liquid separator, wherein the absorption tower absorbs carbon dioxide contained in a gas by using the absorption liquid, the electrolysis/regeneration unit regenerates the absorption liquid by desorbing captured carbon dioxide, and the gas-liquid separator separates the regenerated absorption liquid and the desorbed carbon dioxide.

### Citation List

### Patent Literature

Patent Document 1: JP 2016-132800 A
Patent Document 2: EP 3 527 695 A1
Patent Document 3: JP 2015-199042 A

### SUMMARY

However, Patent Document 1 describes producing an organic compound by electrolysis of an aqueous solution containing carbon dioxide absorbed in water, but does not describe producing a reduction product by reducing carbon dioxide using carbon dioxide absorbed in an amine-containing aqueous solution as the source. It also does not describe that carbon monoxide is produced using carbon dioxide as the source.

In view of the above, an object of the present invention is to provide a carbon dioxide reduction system and a carbon dioxide reduction method to efficiently produce a reduction product using carbon dioxide as the source. The present invention is defined by the claims.

In a first aspect, the present invention thus relates to a carbon dioxide reduction system as defined in claim 1. The carbon dioxide reduction system comprises: an absorption tower configured to bring a source gas containing carbon dioxide into contact with an absorption liquid composed of an aqueous solution containing at least one amine compound so that the carbon dioxide is absorbed in the absorption liquid; an electrolysis apparatus for electrolyzing the carbon dioxide absorbed in the absorption liquid in the absorption tower; a circulation line for circulating the absorption liquid between the absorption tower and the electrolysis apparatus, wherein the circulation line includes an absorption liquid supply line for supplying the absorption liquid in the electrolysis apparatus to the absorption tower; an impurity removal apparatus for removing an impurity which is a component other than the at least one amine compound and water from the absorption liquid flowing through the absorption liquid supply line; an absorption liquid collection line for supplying a part of the absorption liquid circulating in the absorption liquid supply line from the absorption liquid supply line to the impurity removal apparatus; and an absorption liquid return line for returning the part of the absorption liquid from which the impurity was removed by the impurity removal apparatus from the impurity removal apparatus to the absorption liquid supply line.

In a second aspect, the present invention thus relates to a carbon dioxide reduction method as defined in claim 9. The carbon dioxide reduction method comprises: an absorption step of bringing a source gas containing carbon dioxide into contact with an absorption liquid composed of an aqueous solution containing at least one amine compound in an absorption tower so that the carbon dioxide is absorbed in the absorption liquid; an electrolysis step of electrolyzing the carbon dioxide absorbed in the absorption liquid in the absorption step in an electrolysis apparatus; a circulation step of circulating the absorption liquid between the absorption tower and the electrolysis apparatus via a circulation line, wherein the circulation line includes an absorption liquid supply line for supplying the absorption liquid in the electrolysis apparatus to the absorption tower; an absorption liquid collection step of supplying a part of the absorption liquid circulated in the absorption liquid supply line from the absorption liquid supply line to an impurity removal apparatus; after the electrolysis step, an impurity removing step of removing an impurity which is a component other than the at least one amine compound and water from the absorption liquid subjected to electrolysis in the impurity removal apparatus; and an absorption liquid returning step of returning the part of the absorption liquid from which the impurity was removed by the impurity removal apparatus from the impurity removal apparatus to the absorption liquid supply line.

With the carbon dioxide reduction system and the carbon dioxide reduction method according to the present invention, by electrolyzing carbon dioxide absorbed in the absorption liquid composed of an aqueous solution containing at least one amine compound, it is possible to efficiently produce a reduction product by reduction of carbon dioxide.

### BRIEF DESCRIPTION OF DRAWINGS

FIG 1 is a schematic configuration diagram of the carbon dioxide reduction system according to an embodiment of the present invention.
FIG 2 is a schematic configuration diagram of an example of the impurity removal apparatus disposed in the carbon dioxide reduction system according to an embodiment of the present invention.
FIG 3 is a schematic configuration diagram of an example of the impurity removal apparatus disposed in the carbon dioxide reduction system according to an embodiment of the present invention.
FIG 4 is a schematic configuration diagram of an example of the impurity removal apparatus disposed in the carbon dioxide reduction system according to an embodiment of the present invention.
FIG 5 is a schematic configuration diagram of an example of the impurity removal apparatus disposed in the carbon dioxide reduction system according to an embodiment of the present invention.
FIG 6 is a schematic configuration diagram of an example of the impurity removal apparatus disposed in the carbon dioxide reduction system according to an embodiment of the present invention.
FIG 7 is a schematic configuration diagram of an example of the impurity removal apparatus disposed in the carbon dioxide reduction system according to an embodiment of the present invention.

### DETAILED DESCRIPTION

Hereinafter, the carbon dioxide reduction system and the carbon dioxide reduction method according embodiments of the present invention will be described based on the drawings. The following embodiments are illustrative and not intended to limit the present disclosure, and various modifications are possible within the scope of the claims.

### <Configuration of carbon dioxide reduction system of present invention>

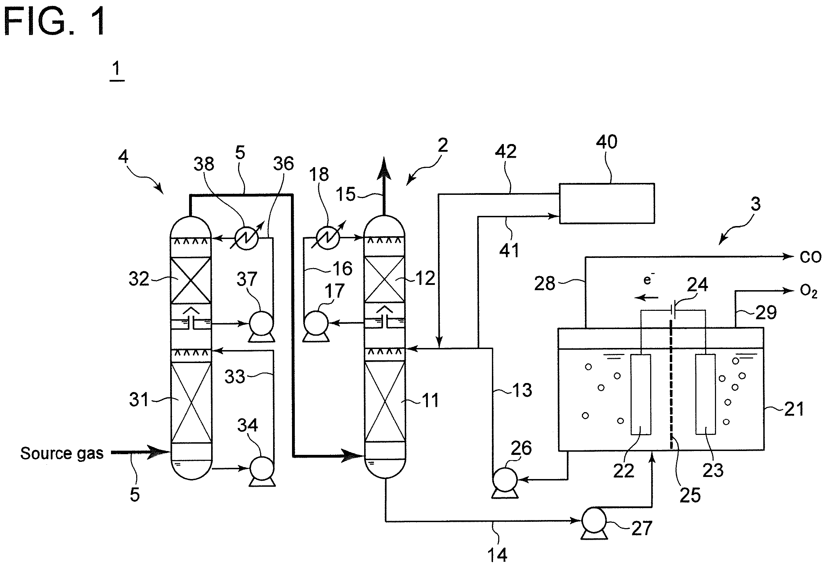

As shown in FIG 1, the carbon dioxide reduction system 1 according to an embodiment of the present invention includes an absorption tower 2 configured to bring a source gas containing carbon dioxide into contact with an absorption liquid so that the carbon dioxide is absorbed in the absorption liquid, and an electrolysis apparatus 3 for electrolyzing the carbon dioxide absorbed in the absorption liquid in the absorption tower 2. The absorption liquid is an aqueous solution containing at least one amine compound. Examples of the amine compound include alkanolamines such as monoethanolamine, diethanolamine, diisopropanolamine, methyldiethanolamine, and triethanolamine. In particular, a primary amine or a secondary amine, which absorbs carbon dioxide more efficiently than a tertiary amine to produce carbamic acid, is preferably used as the amine compound. The absorption liquid may contain an organic solvent.

The absorption tower 2 is divided into a lower stage 11 and an upper stage 12 whose interiors communicating with each other. The interiors of the lower stage 11 and the upper stage 12 may be packed with packing materials such as Raschig rings, or may be provided with multiple stages of plates.

The lower stage 11 is connected to a source gas supply line 5 for supplying the source gas to the lower stage 11, an absorption liquid supply line 13 for supplying the absorption liquid to the lower stage 11, and an absorption liquid drain line 14 for draining the absorption liquid in the lower stage 11. The absorption liquid supply line 13 is connected to the lower stage 11 at a higher position than the source gas supply line 5. The absorption liquid drain line 14 is connected to the bottom of the absorption tower 2.

The upper stage 12 is connected to a source gas discharge line 15 for discharging the source gas which has been brought into contact with the absorption liquid in the lower stage 11, from the absorption tower 2. The source gas discharge line 15 is connected to the top of the absorption tower 2. Further, the upper stage 12 is provided with a water circulation line 16 connected at one end to a lower portion of the upper stage 12 and connected at the other end to an upper portion of the upper stage 12. The water circulation line 16 is provided with a circulation pump 17 and a cooler 18.

As the electrolysis apparatus 3, an electrolysis apparatus having any configuration may be used. In FIG 1, the electrolysis apparatus 3 with a basic structure is depicted. The electrolysis apparatus 3 includes a casing 21 for storing the absorption liquid supplied from the lower stage 11 of the absorption tower 2 via the absorption liquid drain line 14, a cathode 22 and an anode 23 disposed so as to be immersed in the absorption liquid in the casing 21, and a direct-current (DC) power source 24 for applying voltage to the cathode 22 and the anode 23. The interior of the casing 21 is divided into a section with the cathode 22 and a section with the anode 23 by a porous plate 25, for example. To selectively produce carbon monoxide as the reduction product, a catalytic electrode including a catalytic layer formed on the surface of the cathode 22 may be used, or a homogeneous catalyst such as an organometallic complex may be added to the absorption liquid. Herein, the amine compound includes the homogeneous catalyst. Temperature and pressure conditions of the casing 21 may be controlled to efficiently produce carbon monoxide.

The absorption liquid supply line 13 and the absorption liquid drain line 14 are connected to the section with the cathode 22 of the casing 21. In other words, the lower stage 11 of the absorption tower 2 communicates with the section having the cathode 22 of the casing 21 via the absorption liquid supply line 13 and the absorption liquid drain line 14. The absorption liquid supply line 13 is provided with an absorption liquid supply pump 26, and the absorption liquid drain line 14 is provided with an absorption liquid drain pump 27.

As described later, since the section with the cathode 22 of the casing 21 produces carbon monoxide while the section with the anode 23 of the casing 21 produces oxygen, the casing 21 is connected with a carbon monoxide discharge line 28 for discharging carbon monoxide from the section with the cathode 22 of the casing 21, and with an oxygen discharge line 29 for discharging oxygen from the section with the anode 23 of the casing 21. Although this embodiment is described in conjunction with the case where the substance produced at the section with the anode 23 is oxygen, a substance other than oxygen may be produced depending on the conditions of electrolysis.

The carbon dioxide reduction system 1 may, but not necessarily, include a pre-treatment tower 4 disposed on the source gas supply line 5 for performing pre-treatment of the source gas before the source gas is introduced into the absorption tower 2. The pre-treatment may be, but not limited to, removal of unnecessary components contained in the source gas, for example, removal of sulfur oxides from the source gas, or cooling of the source gas. The pre-treatment tower 4 is divided into a lower stage 31 and an upper stage 32 whose interiors communicating with each other. The interiors of the lower stage 31 and the upper stage 32 may be packed with packing materials such as Raschig rings, or may be provided with multiple stages of plates.

The lower stage 31 is provided with an aqueous solution circulation line 33 connected at one end to a lower portion of the lower stage 31 and connected at the other end to an upper portion of the lower stage 31. The aqueous solution circulation line 33 is provided with a circulation pump 34. The aqueous solution circulating in the aqueous solution circulation line 33 may be, for example, a sodium hydroxide aqueous solution, which can absorb sulfur oxides contained in the source gas. On the other hand, the upper stage 32 is provided with a water circulation line 36 connected at one end to a lower portion of the upper stage 32 and connected at the other end to an upper portion of the upper stage 32. The water circulation line 36 is provided with a circulation pump 37 and a cooler 38.

The carbon dioxide reduction system 1 includes an impurity removal apparatus 40 for removing an impurity, which is a component other than the amine compound and water, from the absorption liquid discharged from the section with the cathode 22 of the casing 21 and flowing through the absorption liquid supply line 13. The impurity removal apparatus 40 communicates with the absorption liquid supply line 13 via an absorption liquid collection line 41 and an absorption liquid return line 42. The impurity removal apparatus 40 is not limited to a particular configuration, but may have any configuration which enables impurities to be removed from the absorption liquid in any manner. Examples of the configuration of the impurity removal apparatus 40 will be described below.

### <Examples of impurity removal apparatus>

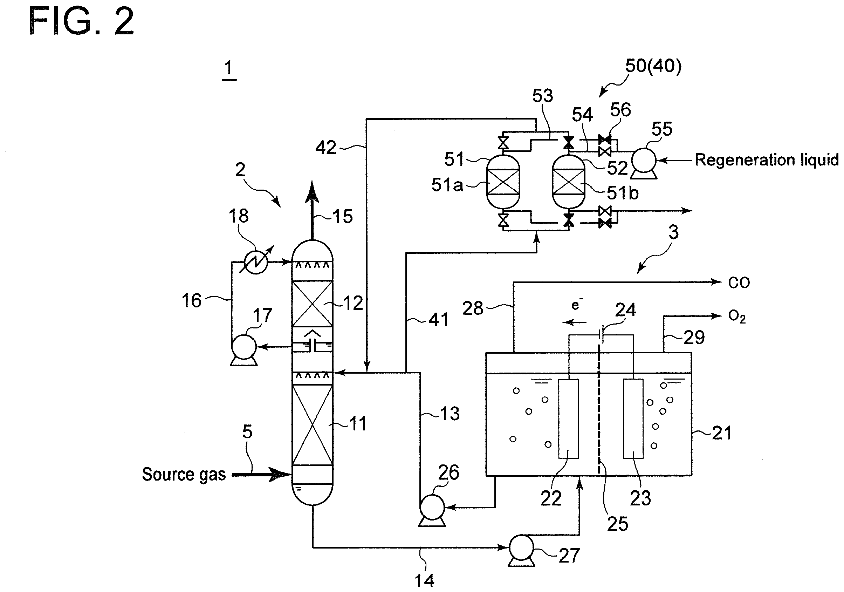

As shown in FIG 2, as the impurity removal apparatus 40, an ion exchange separation apparatus 50 may be used. The ion exchange separation apparatus 50 includes two ion exchange resin towers 51, 52. The ion exchange resin towers 51, 52 accommodate ion exchange resins 51a, 51b, respectively. The ion exchange resin towers 51, 52 are connected to the absorption liquid collection line 41 and the absorption liquid return line 42, and each of the ion exchange resin towers 51, 52 is supplied with the absorption liquid discharged from the casing 21 of the electrolysis apparatus 3. The ion exchange resin towers 51, 52 are connected to regeneration liquid supply lines 53, 54, respectively, through which a regeneration liquid for regenerating the ion exchange resins 51a, 51b is supplied. The regeneration liquid supply lines 53, 54 are provided with a regeneration liquid pump 55 for supplying the regeneration liquid. Each of the regeneration liquid supply lines 53, 54 is provided with a plurality of valves 56 for switching the target to be supplied with the regeneration liquid so that the regeneration liquid is supplied to either one of the ion exchange resin towers 51, 52.

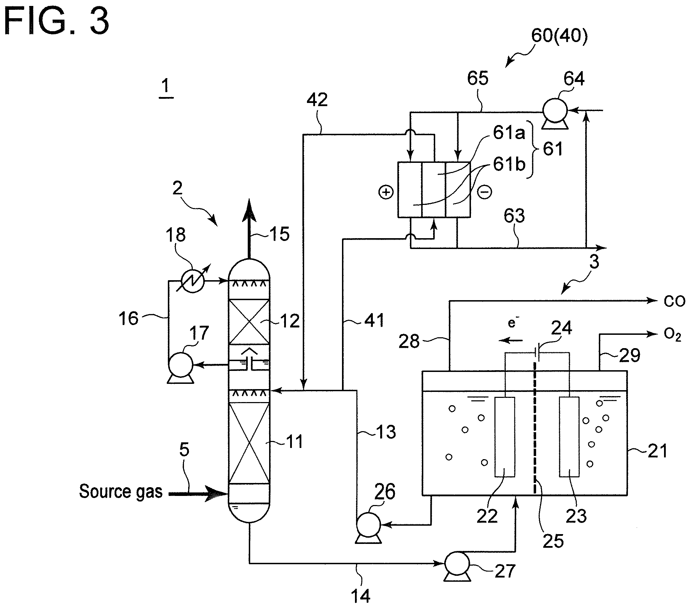

As shown in FIG 3, as the impurity removal apparatus 40, an electrodialysis apparatus 60 may be used. The electrodialysis apparatus 60 includes a dialyzer 61 whose interior is divided into two sections 61a, 61b by an ion exchange membrane 62. One section 61a is connected to the absorption liquid collection line 41 and the absorption liquid return line 42 so that the section 61a is supplied with the absorption liquid discharged from the casing 21 of the electrolysis apparatus 3. The other section 61b is connected to a dialysis fluid supply line 65 for supplying a dialysis fluid and a dialysis fluid discharge line 63. The dialysis fluid supply line 65 is provided with a dialysis fluid pump 64.

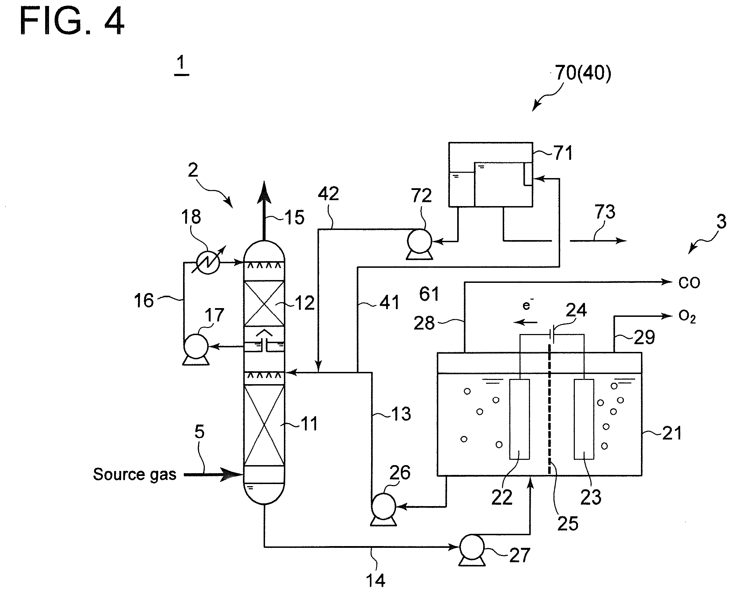

As shown in FIG 4, as the impurity removal apparatus 40, a phase separation apparatus 70 may be used. The phase separation apparatus 70 includes a casing 71 whose interior is divided into sections by a partition or the like so that insoluble components, such as hydrogen carbonate generated as a degraded product of the absorption liquid and solid particles contained in the source gas, can be phase-separated by a density difference or a solubility difference. The absorption liquid collection line 41 is connected to the casing 71 so that the absorption liquid discharged from the casing 21 of the electrolysis apparatus 3 is supplied to the casing 71. A section of the casing 71 for storing the absorption liquid from which insoluble components have been removed is connected to the absorption liquid return line 42, and the absorption liquid return line 42 is provided with a drain pump 72. A section of the casing 71 for storing the insoluble components which have been removed from the absorption liquid is connected to a discharge line 73 for discharging the insoluble components from the casing 71.

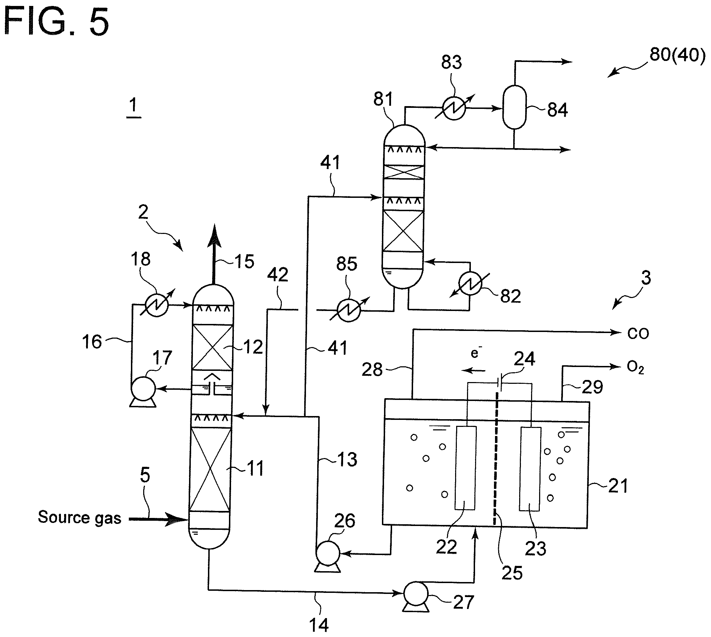

As shown in FIG 5, as the impurity removal apparatus 40, a distillation apparatus 80 may be used. The distillation apparatus 80 includes a distillation tower 81 configured to be supplied with the absorption liquid via the absorption liquid collection line 41, a reboiler 82 for heating a liquid discharged from the bottom of the distillation tower 81 into vapor and reintroducing the vapor to the distillation tower 81, a condenser 83 for condensing the vapor discharged from the top of the distillation tower 81, and a reflux tank 84 for storing a liquid obtained by condensing the vapor with the condenser 83. The absorption liquid return line 42 is connected to the bottom of the distillation tower 81, and the absorption liquid return line 42 is provided with a cooler 85.

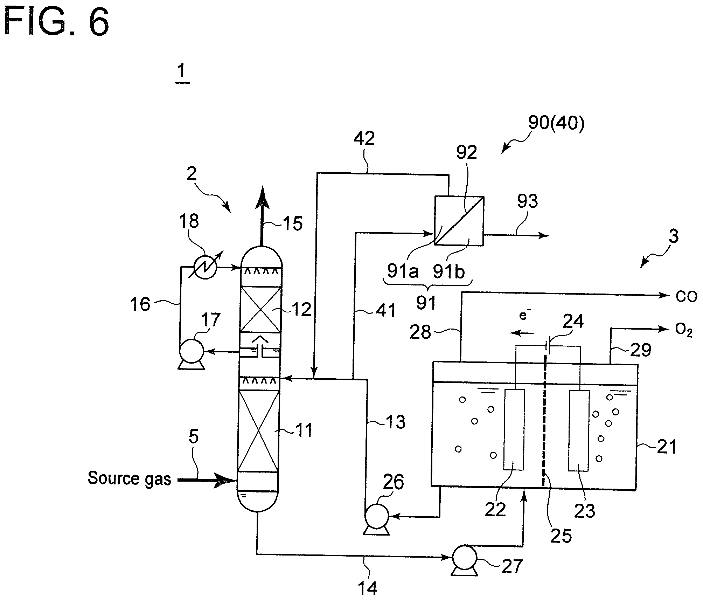

As shown in FIG 6, as the impurity removal apparatus 40, a membrane separation apparatus 90 may be used. The membrane separation apparatus 90 includes a casing 91 whose interior is divided into two sections 91a, 91b by a separation membrane 92. One section 91a is connected to the absorption liquid collection line 41 and the absorption liquid return line 42 so that the casing 71 is supplied with the absorption liquid discharged from the casing 21 of the electrolysis apparatus 3. The other section 91b is connected to a discharge line 93.

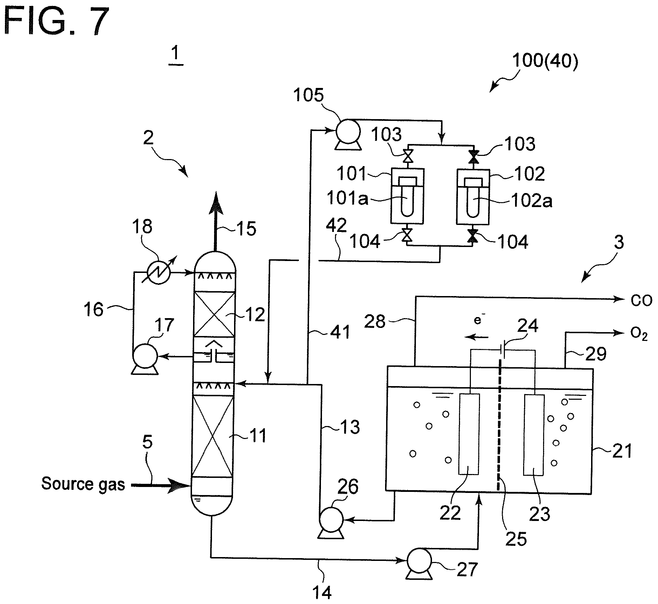

As shown in FIG 7, as the impurity removal apparatus 40, a filtration apparatus 100 may be used. The filtration apparatus 100 includes two filtration devices 101, 102. The filtration devices 101, 102 accommodate filters 101a, 101b, respectively. The absorption liquid collection line 41 and the absorption liquid return line 42 are connected to each of the filtration devices 101, 102 so that each of the filtration devices 101, 102 is supplied with the absorption liquid discharged from the casing 21 of the electrolysis apparatus 3. The lines are provided with a pair of valves 103, 103 for switching the target to be supplied with the absorption liquid so that the absorption liquid is supplied to either one of the filtration devices 101, 102, and a pair of valves 104, 104 for switching so that the one of the filtration devices 101, 102 supplied with the absorption liquid communicates with the absorption liquid return line 42. The absorption liquid collection line 41 is provided with a booster pump 105.

The impurity removal apparatus 40 is not limited to the ion exchange separation apparatus 50, the electrodialysis apparatus 60, the phase separation apparatus 70, the distillation apparatus 80, the membrane separation apparatus 90, and the filtration apparatus 100. Any apparatus, such as a gas-liquid separation apparatus or an extraction apparatus, may be used as the impurity removal apparatus 40 according to impurities.

### <Operation of carbon dioxide reduction system of present invention>

Operation of the carbon dioxide reduction system 1 (including the carbon dioxide reduction method) according to the present invention will be now described. As shown in FIG 1, the source gas containing carbon dioxide is supplied to the lower stage 31 of the pre-treatment tower 4 via the source gas supply line 5. The source gas may be exhaust gas discharged from a combustion device, or may be air, which contains about 400 ppm of carbon dioxide. That is, the source gas is not limited to a particular gas but may be any gas containing carbon dioxide.

At the bottom of the pre-treatment tower 4, a sodium hydroxide aqueous solution is stored. The sodium hydroxide aqueous solution flows through the aqueous solution circulation line 33 by the circulation pump 34 and is returned to the lower stage 31 of the pre-treatment tower 4. The sodium hydroxide aqueous solution then flows downward in the lower stage 31. On the other hand, the source gas supplied to the lower stage 31 moves upward in the lower stage 31. At this time, the source gas comes into contact with the sodium hydroxide aqueous solution, and sulfur oxides contained in the source gas are absorbed in the sodium hydroxide aqueous solution. The source gas from which sulfur oxides have been thus removed is introduced into the upper stage 32 of the pre-treatment tower 4. According to this operation, the lower stage 31 of the pre-treatment tower 4 constitutes a sulfur oxide removal unit for removing sulfur oxides contained in the source gas.

In the interior of the upper stage 32 of the pre-treatment tower 4, water is stored. The water flows through the water circulation line 36 by the circulation pump 37, is cooled by the cooler 38, and then returned to the upper stage 32 of the pre-treatment tower 4. The water then flows downward in the upper stage 32. On the other hand, the source gas introduced into the upper stage 32 moves upward in the upper stage 32. At this time, the source gas comes into contact with the water, so that the source gas is cooled. The cooled source gas is discharged from the top of the pre-treatment tower 4 and flows through the source gas supply line 5. According to this operation, the upper stage 32 of the pre-treatment tower 4 constitutes a source gas cooling unit for cooling the source gas.

The source gas thus subjected to pre-treatment in the pre-treatment tower 4 is supplied to the lower stage 11 of the absorption tower 2 via the source gas supply line 5. The lower stage 11 is supplied with the absorption liquid via the absorption liquid supply line 13, and the absorption liquid flows downward in the lower stage 11. On the other hand, the source gas supplied to the lower stage 11 moves upward in the lower stage 11. At this time, the source gas comes into contact with the absorption liquid, and carbon dioxide contained in the source gas is absorbed in the absorption liquid. The source gas from which carbon dioxide has been thus removed is introduced into the upper stage 12 of the absorption tower 2. According to this operation, the lower stage 11 of the absorption tower 2 constitutes an absorption unit for causing the absorption tower to absorb carbon dioxide.

In the interior of the upper stage 12 of the absorption tower 2, water is stored. The water flows through the water circulation line 16 by the circulation pump 17, is cooled by the cooler 18, and then returned to the upper stage 12 of the absorption tower 2. The water then flows downward in the upper stage 12. On the other hand, the source gas introduced into the upper stage 12 moves upward in the upper stage 12. At this time, the source gas comes into contact with the water, so that the source gas is cooled. Although vapor of the amine compound may be mixed into the source gas introduced into the upper stage 12 upon contact between the source gas and the absorption liquid in the lower stage 11, since the vapor of the amine compound is cooled by water upon contact between the source gas and the water in the upper stage 12, the amine compound can be removed from the source gas. The source gas cooled in the upper stage 12 is discharged from the top of the absorption tower 2 via the source gas discharge line 15. According to this operation, the upper stage 12 of the absorption tower 2 constitutes a cleaning unit for removing vapor of the amine compound contained in the source gas.

The absorption liquid absorbing carbon dioxide in the source gas in the lower stage 11 is discharged from the bottom of the absorption tower 2, flows through the absorption liquid rain line 14 by the absorption liquid drain pump 27, and is supplied into the casing 21 of the electrolysis apparatus 3. Thus, the absorption liquid absorbing carbon dioxide is stored in the casing 21. While the cathode 22 and the anode 23 are immersed in the absorption liquid in the casing 21, the DC power source 24 applies voltage to the cathode 22 and the anode 23.

Here, the voltage is applied such that the current density between the cathode 22 and the anode 23 is 0.01 A/cm² or more and 3 A/cm² or less, preferably 0.1 A/cm² or more and 1 A/cm² or less. When the current density between the cathode 22 and the anode 23 is in this range, carbon dioxide absorbed in the absorption liquid is electrolyzed, and carbon monoxide is produced at the cathode 22. Meanwhile, for example, oxygen is produced at the anode 23. Carbon monoxide and oxygen produced in the casing 21 are discharged from the casing 21 via the carbon monoxide discharge line 28 and the oxygen discharge line 29, respectively.

During electrolysis of carbon dioxide in the electrolysis apparatus 3, a part of the absorption liquid is drained from the casing 21 by the absorption liquid supply pump 26. The absorption liquid drained from the casing 21 flows through the absorption liquid supply line 13 and is supplied to the lower stage 11 of the absorption tower 2. As described above, the absorption liquid supplied to the lower stage 11 of the absorption tower 2 flows downward in the lower stage 11 and comes into contact with the source gas which moves upward in the lower stage 11, so that carbon dioxide contained in the source gas is absorbed. According to this operation, since the absorption liquid circulates between the absorption tower 2 and the electrolysis apparatus 3 via the absorption liquid supply line 13 and the absorption liquid drain line 14, the absorption liquid supply line 13 and the absorption liquid drain line 14 constitute a circulation line.

Thus, with the carbon dioxide reduction system according to the present invention, by electrolyzing carbon dioxide absorbed in the absorption liquid, it is possible to efficiently produce carbon monoxide using carbon dioxide as the source.

Although the above operation has been described in conjunction with the configuration including the pre-treatment tower 4, so that the source gas is subjected to pre-treatment in the pre-treatment tower 4 prior to the introduction to the absorption tower 2, the present invention is not limited to this embodiment. In a configuration where the carbon dioxide reduction system 1 does not include the pre-treatment tower 4, the source gas is not subjected to pre-treatment, and is directly supplied to the lower stage 11 of the absorption tower 2 via the source gas supply line 5. However, the provision of the pre-treatment tower 4 can reduce, through pre-treatment of the source gas prior to the introduction to the absorption tower 2, factors of inhibiting absorption of carbon dioxide into the absorption liquid in the absorption tower 2 and electrolysis of carbon dioxide in the electrolysis apparatus 3, thus improving the yield of carbon monoxide.

As described above, the absorption liquid in the electrolysis apparatus 3 is supplied to the absorption tower 2 as the absorption liquid that comes into contact with the source gas containing carbon dioxide, but this absorption liquid contains impurities, which are components other than the amine compound and water, due to electrolysis of carbon dioxide in the electrolysis apparatus 3. Further, besides impurities due to electrolysis of carbon dioxide, impurities originally contained in the source gas, or impurities due to degradation of the amine compound caused by contact with the source gas may also be contained in this absorption liquid. Therefore, since the carbon dioxide reduction system 1 includes the impurity removal apparatus 40, a part of the absorption liquid circulating in the absorption liquid supply line 13 is supplied to the impurity removal apparatus 40 via the absorption liquid collection line 41. Impurities contained in the absorption liquid are removed in accordance with the configuration of the impurity removal apparatus 40, and the absorption liquid from which impurities have been removed is returned to the absorption liquid supply line 13 via the absorption liquid return line 42, and is supplied to the lower stage 11 of the absorption tower 2.

Thus, with the configuration including the impurity removal apparatus 40, since the absorption liquid from which impurities have been removed by the impurity removal apparatus 40 is supplied to the absorption tower 2, it is possible to improve the absorption efficiency of carbon dioxide in the absorption tower 2, and further it is possible to improve the production efficiency of carbon monoxide in the electrolysis apparatus 3.

As shown in FIG 2, when the impurity removal apparatus 40 is the ion exchange separation apparatus 50, the absorption liquid flowing from the absorption liquid supply line 13 to the absorption liquid collection line 41 is supplied to either one of the ion exchange resin towers 51, 52 by operation of the plurality of valves 56, and ions corresponding to the used ion exchange resins 51a, 51b are removed as impurities. The absorption liquid from which impurities have been removed is discharged from the ion exchange resin towers 51, 52, then flows through the absorption liquid return line 42 and the absorption liquid supply line 13 sequentially, and is supplied to the lower stage 11 of the absorption tower 2. As the impurity removal operation continues, the ion exchange resin is degraded. Accordingly, by operating the plurality of valves 56, the target to be supplied with the absorption liquid is changed to the other of the ion exchange resin towers 51, 52. During this time, the regeneration liquid is supplied to the ion exchange resin tower accommodating the degraded ion exchange resin by the regeneration liquid pump 55 to regenerate the degraded ion exchange resin.

As shown in FIG 3, when the impurity removal apparatus 40 is the electrodialysis apparatus 60, the absorption liquid flowing from the absorption liquid supply line 13 to the absorption liquid collection line 41 is supplied to one section 61a of the dialyzer 61. The other section 61b of the dialyzer 61 is supplied with the dialysis fluid by the dialysis fluid pump 64. In the dialyzer 61, specific ions pass through the ion exchange membrane 62 as impurities. Thus, impurities are removed from the absorption liquid. The absorption liquid discharged from the section 61a flows through absorption liquid return line 42 and the absorption liquid supply line 13 sequentially, and is supplied to the lower stage 11 of the absorption tower 2.

As shown in FIG 4, when the impurity removal apparatus 40 is the phase separation apparatus 70, the absorption liquid flowing from the absorption liquid supply line 13 to the absorption liquid collection line 41 is supplied to the casing 71 and is kept still so that insoluble components are separated by a density difference or a solubility difference. The separated impurities are discharged from the casing 71 via the discharge line 73. The absorption liquid from which the insoluble components have been separated is returned to the absorption liquid supply line 13 via the absorption liquid return line 42 by the drain pump 72, and is supplied to the lower stage 11 of the absorption tower 2. In the phase separation, oily components can also be removed as impurities by a difference in specific gravity.

As shown in FIG 5, when the impurity removal apparatus 40 is the distillation apparatus 80, the absorption liquid flowing from the absorption liquid supply line 13 to the absorption liquid collection line 41 is supplied to the distillation tower 81, and normal distillation is performed. In the distillation tower 81, impurities, which are components having a lower boiling point than the amine compound, such as volatile components of methanol or ethanol, are separated from the absorption liquid, extracted from the top of the distillation tower 81, and thus removed from the absorption liquid. The absorption liquid from which volatile components have been removed is discharged from the bottom of the distillation tower 81, cooled by the cooler 85 when flowing through the absorption liquid return line 42, enters the absorption liquid supply line 13, and is supplied to the lower stage 11 of the absorption tower 2.

As shown in FIG 6, when the impurity removal apparatus 40 is the membrane separation apparatus 90, the absorption liquid flowing from the absorption liquid supply line 13 to the absorption liquid collection line 41 is introduced into one section 91a of the casing 91. By molecular sieving, high molecular ions in the absorption liquid introduced into the section 91a do not permeate the separation membrane 92 while impurities, which are low molecular ions, selectively permeate the separation membrane 92 and move to the other section 91b. Thus, impurities are removed from the absorption liquid. The impurities removed from the absorption liquid are discharged from the casing 91 via the discharge line 93. The absorption liquid discharged from the section 91a flows through absorption liquid return line 42 and the absorption liquid supply line 13 sequentially, and is supplied to the lower stage 11 of the absorption tower 2.

As shown in FIG 7, when the impurity removal apparatus 40 is the filtration apparatus 100, the absorption liquid flowing from the absorption liquid supply line 13 to the absorption liquid collection line 41 is pressurized by the booster pump 105 and supplied to either one of the filtration devices 101, 102 in accordance with operations of the pair of valves 103, 103, and the pair of valves 104, 104. Since the filtration apparatus is supplied with the pressurized absorption liquid, impurities such as insoluble components and solid components are removed by the filter 101a, 102a in the filtration device 101, 102, and the absorption liquid from which impurities have been removed is discharged from the filtration device 101, 102, returned to the absorption liquid supply line 13 via the absorption liquid return line 42, and supplied to the lower stage 11 of the absorption tower 2. As the impurity removal operation continues, the filter is clogged. To remedy this, the pair of valves 103, 103 and the pair of valves 104, 104 are operated to switch the target to be supplied with the absorption liquid to the other of the filtration devices 101, 102. The clogged filter can be replaced during this time.

Thus, since the impurity removal apparatus 40 having a suitable configuration can be used according to impurities contained in the absorption liquid, it is possible to appropriately remove impurities.

In the above embodiments, the carbon dioxide reduction system 1 and the carbon dioxide reduction method according to the present invention are the carbon monoxide production system and the carbon monoxide production method where the reduction product is carbon monoxide, but the present invention is not limited to these embodiments. Since an organic compound such as formic acid, formaldehyde, methanol, methane can also be produced depending on electrolysis conditions of the electrolysis apparatus 3, the reduction product may be such an organic compound that can be produced by reduction of carbon dioxide. When the reduction product is such an organic compound, the carbon dioxide reduction system 1 and the carbon dioxide reduction method according to the present invention are the system and method for producing the organic compound.

The contents described in the above embodiments would be understood as follows.

The carbon dioxide reduction system according to the present invention comprises: an absorption tower (2) configured to bring a source gas containing carbon dioxide into contact with an absorption liquid composed of an aqueous solution containing at least one amine compound so that the carbon dioxide is absorbed in the absorption liquid; an electrolysis apparatus (3) for electrolyzing the carbon dioxide absorbed in the absorption liquid in the absorption tower (2); and a circulation line (absorption liquid supply line 13/ absorption liquid drain line 14) for circulating the absorption liquid between the absorption tower (2) and the electrolysis apparatus (3).

With the carbon dioxide reduction system according to the present invention, by electrolyzing carbon dioxide absorbed in the absorption liquid composed of an aqueous solution containing at least one amine compound, it is possible to efficiently produce a reduction product by reduction of carbon dioxide.

In a preferred embodiment of the carbon dioxide reduction system of the present invention, the absorption tower includes: an absorption unit for causing the carbon dioxide to be absorbed in the absorption liquid; and a cleaning unit for removing vapor of the at least one amine compound contained in the source gas from which the carbon dioxide has been removed.

With the above configuration, although vapor of the amine compound may be mixed into the source gas introduced into the cleaning unit upon contact between the source gas and the absorption liquid in the absorption unit, since the vapor of the amine compound is cooled by water and liquefied upon contact between the source gas and the water in the cleaning unit, the amine compound can be removed from the source gas.

The carbon dioxide reduction system of the present invention further comprises an absorption liquid supply line (13) for supplying the absorption liquid in the electrolysis apparatus (3) to the absorption tower (2); and an impurity removal apparatus (40) for removing an impurity which is a component other than the at least one amine compound and water from the absorption liquid flowing through the absorption liquid supply line (13).

The absorption liquid in the electrolysis apparatus is supplied to the absorption tower as the absorption liquid that comes into contact with the source gas containing carbon dioxide, but this absorption liquid contains an impurity, which is a component other than the amine compound and water. However, with the above configuration, since the absorption liquid from which the impurity has been removed by the impurity removal apparatus is supplied to the absorption tower, it is possible to improve the absorption efficiency of carbon dioxide in the absorption tower, and further it is possible to improve the production efficiency of a reduction product in the electrolysis apparatus.

In a preferred embodiment of the carbon dioxide reduction system of the present invention, the impurity removal apparatus (40) is an ion exchange separation apparatus (50), an electrodialysis apparatus (60), a gas-liquid separation apparatus, a phase separation apparatus (70), an extraction apparatus, a distillation apparatus (80), a membrane separation apparatus (90), or a filtration apparatus (100).

With this configuration, since the impurity removal apparatus having a suitable configuration can be used according to impurities contained in the absorption liquid, it is possible to appropriately remove impurities.

In a preferred embodiment of the carbon dioxide reduction system of the present invention, the carbon dioxide reduction system further comprises a pre-treatment tower (4) for performing pre-treatment of the source gas before the source gas is introduced to the absorption tower (2).

With this configuration, through pre-treatment of the source gas prior to the introduction to the absorption tower, it is possible to reduce factors of inhibiting absorption of carbon dioxide into the absorption liquid in the absorption tower and electrolysis of carbon dioxide in the electrolysis apparatus. Thus, it is possible to further improve the yield of the reduction product.

In a preferred embodiment of the carbon dioxide reduction system of the present invention, the pre-treatment tower (4) includes a source gas cooling unit (upper stage 32) for cooling the source gas.

With this configuration, by cooling the source gas, it is possible to reduce factors of inhibiting absorption of carbon dioxide into the absorption liquid in the absorption tower. Thus, it is possible to further improve the yield of the reduction product.

In a preferred embodiment of the carbon dioxide reduction system of the present invention, the pre-treatment tower (4) includes a sulfur oxide removal unit (lower stage 31) for removing a sulfur oxide contained in the source gas.

With this configuration, by removing a sulfur oxide contained in the source gas, it is possible to reduce factors of inhibiting absorption of carbon dioxide into the absorption liquid in the absorption tower and electrolysis of carbon dioxide in the electrolysis apparatus. Thus, it is possible to further improve the yield of reduction product.

In a preferred embodiment of the carbon dioxide reduction system of the present invention, at least one of the at least one amine compound is a primary amine or a secondary amine.

A primary amine or a secondary amine absorbs carbon dioxide more efficiently than a tertiary amine to produce carbamic acid. Accordingly, with the above configuration, it is possible to efficiently absorb carbon dioxide in the absorption tower.

In a preferred embodiment of the carbon dioxide reduction system of the present invention, a reduction product obtained by reducing the carbon dioxide by electrolysis of the carbon dioxide in the electrolysis device (3) is carbon monoxide.

With this configuration, by electrolyzing carbon dioxide absorbed in the absorption liquid composed of an aqueous solution containing at least one amine compound, it is possible to efficiently produce carbon monoxide by reduction of carbon dioxide.

The carbon dioxide reduction method according to the present invention comprises: an absorption step of bringing a source gas containing carbon dioxide into contact with an absorption liquid composed of an aqueous solution containing at least one amine compound in an absorption tower (2) so that the carbon dioxide is absorbed in the absorption liquid; an electrolysis step of electrolyzing the carbon dioxide absorbed in the absorption liquid in the absorption step in an electrolysis apparatus (3); and a circulation step of circulating the absorption liquid between the absorption tower (2) and the electrolysis apparatus (3).

With the carbon dioxide reduction method according to the present invention, by electrolyzing carbon dioxide absorbed in the absorption liquid composed of an aqueous solution containing at least one amine compound, it is possible to efficiently produce a reduction product by reduction of carbon dioxide.

The carbon dioxide reduction method of the present invention further comprises, after the electrolysis step, an impurity removing step of removing an impurity which is a component other than the at least one amine compound and water from the absorption liquid subjected to electrolysis.

The absorption liquid in the electrolysis step is used as the absorption liquid in the absorption step, but this absorption liquid contains an impurity, which is a component other than the amine compound and water. However, with the above method, since the absorption liquid from which the impurity has been removed is used in the absorption step, it is possible to improve the absorption efficiency of carbon dioxide in the absorption step, and further it is possible to improve the production efficiency of a reduction product in the electrolysis step.

In a preferred embodiment of the carbon dioxide reduction method of the present invention, a reduction product obtained by reducing the carbon dioxide by electrolysis of the carbon dioxide in the electrolysis step is carbon monoxide.

With this configuration, by electrolyzing carbon dioxide absorbed in the absorption liquid composed of an aqueous solution containing at least one amine compound, it is possible to efficiently produce carbon monoxide by reduction of carbon dioxide.

## Claims

1. A carbon dioxide reduction system (1) comprising:
an absorption tower (2) configured to bring a source gas containing carbon dioxide into contact with an absorption liquid composed of an aqueous solution containing at least one amine compound so that the carbon dioxide is absorbed in the absorption liquid;
an electrolysis apparatus (3) for electrolyzing the carbon dioxide absorbed in the absorption liquid in the absorption tower (2);
a circulation line (13/14) for circulating the absorption liquid between the absorption tower (2) and the electrolysis apparatus (3), wherein the circulation line (13/14) includes an absorption liquid supply line (13) for supplying the absorption liquid in the electrolysis apparatus (3) to the absorption tower (2);
an impurity removal apparatus (40) for removing an impurity which is a component other than the at least one amine compound and water from the absorption liquid flowing through the absorption liquid supply line (13);
an absorption liquid collection line (41) for supplying a part of the absorption liquid circulating in the absorption liquid supply line (13) from the absorption liquid supply line (13) to the impurity removal apparatus (40); and
an absorption liquid return line (42) for returning the part of the absorption liquid from which the impurity was removed by the impurity removal apparatus (40) from the impurity removal apparatus (40) to the absorption liquid supply line (13).

2. The carbon dioxide reduction system (1) according to claim 1, wherein the absorption tower (2) includes:
an absorption unit (11) for causing the carbon dioxide to be absorbed in the absorption liquid; and
a cleaning unit (12) for removing vapor of the at least one amine compound contained in the source gas from which the carbon dioxide has been removed.

3. The carbon dioxide reduction system (1) according to claim 1 or 2, wherein the impurity removal apparatus (40) is an ion exchange separation apparatus (50), an electrodialysis apparatus (60), a gas-liquid separation apparatus, a phase separation apparatus (70), an extraction apparatus, a distillation apparatus (80), a membrane separation apparatus (90), or a filtration apparatus (100).

4. The carbon dioxide reduction system (1) according to any one of claims 1 to 3, further comprising a pre-treatment tower (4) for performing pre-treatment of the source gas before the source gas is introduced to the absorption tower (2) .

5. The carbon dioxide reduction system (1) according to claim 4, wherein the pre-treatment tower (4) includes a source gas cooling unit (32) for cooling the source gas.

6. The carbon dioxide reduction system (1) according to claim 4 or 5, wherein the pre-treatment tower (4) includes a sulfur oxide removal unit for removing a sulfur oxide contained in the source gas.

7. The carbon dioxide reduction system (1) according to any one of claims 1 to 6, wherein at least one of the at least one amine compound is a primary amine or a secondary amine.

8. The carbon dioxide reduction system (1) according to any one of claims 1 to 7, wherein a reduction product obtained by reducing the carbon dioxide by electrolysis of the carbon dioxide in the electrolysis device (3) is carbon monoxide.

9. A carbon dioxide reduction method comprising:
an absorption step of bringing a source gas containing carbon dioxide into contact with an absorption liquid composed of an aqueous solution containing at least one amine compound in an absorption tower (2) so that the carbon dioxide is absorbed in the absorption liquid;
an electrolysis step of electrolyzing the carbon dioxide absorbed in the absorption liquid in the absorption step in an electrolysis apparatus (3);
a circulation step of circulating the absorption liquid between the absorption tower (2) and the electrolysis apparatus (3) via a circulation line (13/14), wherein the circulation line (13/14) includes an absorption liquid supply line (13) for supplying the absorption liquid in the electrolysis apparatus (3) to the absorption tower (2);
an absorption liquid collection step of supplying a part of the absorption liquid circulated in the absorption liquid supply line (13) from the absorption liquid supply line (13) to an impurity removal apparatus (40);
after the electrolysis step, an impurity removing step of removing an impurity which is a component other than the at least one amine compound and water from the absorption liquid subjected to electrolysis in the impurity removal apparatus (40); and
an absorption liquid returning step of returning the part of the absorption liquid from which the impurity was removed by the impurity removal apparatus (40) from the impurity removal apparatus (40) to the absorption liquid supply line (13).

10. The carbon dioxide reduction method according to claim 9, wherein a reduction product obtained by reducing the carbon dioxide by electrolysis of the carbon dioxide in the electrolysis step is carbon monoxide.

## Patentansprüche

1. Ein Kohlendioxid-Reduktionssystem (1), umfassend:
einen Absorptionsturm (2), der konfiguriert ist, um ein Kohlendioxid enthaltendes Quellgas mit einer Absorptionsflüssigkeit in Kontakt zu bringen, die aus einer wässrigen Lösung zusammengesetzt ist, die mindestens eine Aminverbindung enthält, so dass das Kohlendioxid in der Absorptionsflüssigkeit absorbiert wird;
eine Elektrolysevorrichtung (3) zum Elektrolysieren des in der Absorptionsflüssigkeit im Absorptionsturm (2) absorbierten Kohlendioxids;
eine Zirkulationsleitung (13/14) zum Zirkulieren der Absorptionsflüssigkeit zwischen dem Absorptionsturm (2) und der Elektrolysevorrichtung (3), wobei die Zirkulationsleitung (13/14) eine Absorptionsflüssigkeitszuleitung (13) zum Zuführen der Absorptionsflüssigkeit im Elektrolyseapparat (3) zum Absorptionsturm (2);
eine Verunreinigungsentfernungsvorrichtung (40) zum Entfernen einer Verunreinigung, die eine andere Komponente als die mindestens eine Aminverbindung und Wasser ist, aus der Absorptionsflüssigkeit, die durch die Absorptionsflüssigkeitszuleitung (13) fließt;
eine Absorptionsflüssigkeitssammelleitung (41) zum Zuführen eines Teils der in der Absorptionsflüssigkeitszuleitung (13) zirkulierenden Absorptionsflüssigkeit von der Absorptionsflüssigkeitszuleitung (13) zur Verunreinigungsentfernungsvorrichtung (40); und
eine Absorptionsflüssigkeitsrückführleitung (42) zum Zurückführen des Teils der Absorptionsflüssigkeit, aus dem die Verunreinigung durch die Verunreinigungsentfernungsvorrichtung (40) entfernt wurde, von der Verunreinigungsentfernungsvorrichtung (40) zur Absorptionsflüssigkeitszuleitung (13).

2. Das Kohlendioxid-Reduktionssystem (1) nach Anspruch 1, wobei der Absorptionsturm (2) umfasst:
eine Absorptionseinheit (11), um zu bewirken, dass das Kohlendioxid in der Absorptionsflüssigkeit absorbiert wird; Und
eine Reinigungseinheit (12) zum Entfernen von Dampf der mindestens einen Aminverbindung, die in dem Quellgas enthalten ist, aus dem das Kohlendioxid entfernt wurde.

3. Das Kohlendioxid-Reduktionssystem (1) nach Anspruch 1 oder 2, wobei die Verunreinigungsentfernungsvorrichtung (40) eine Ionenaustausch-Trennvorrichtung (50), eine Elektrodialysevorrichtung (60), eine Gas-Flüssigkeit-Trennvorrichtung, Phasentrennvorrichtung (70), eine Extraktionsvorrichtung, eine Destillationsvorrichtung (80), eine Membrantrennvorrichtung (90) oder eine Filtrationsvorrichtung (100) ist.

4. Das Kohlendioxid-Reduktionssystem (1) nach einem der Ansprüche 1 bis 3, weiterhin umfassend einen Vorbehandlungsturm (4) zum Durchführen einer Vorbehandlung des Quellgases, bevor das Quellgas in den Absorptionsturm eingeleitet wird (2).

5. Das Kohlendioxid-Reduktionssystem (1) nach Anspruch 4, wobei der Vorbehandlungsturm (4) eine Quellgaskühleinheit (32) zum Kühlen des Quellgases umfasst.

6. Das Kohlendioxid-Reduktionssystem (1) nach Anspruch 4 oder 5, wobei der Vorbehandlungsturm (4) eine Schwefeloxid-Entfernungseinheit zum Entfernen eines im Quellgas enthaltenen Schwefeloxids umfasst.

7. Das Kohlendioxid-Reduktionssystem (1) nach einem der Ansprüche 1 bis 6, wobei mindestens eine der mindestens einen Aminverbindungen ein primäres Amin oder ein sekundäres Amin ist.

8. Das Kohlendioxid-Reduktionssystem (1) nach einem der Ansprüche 1 bis 7, wobei ein durch Reduktion des Kohlendioxids durch Elektrolyse des Kohlendioxids in der Elektrolysevorrichtung (3) erhaltenes Reduktionsprodukt Kohlenmonoxid ist.

9. Ein Verfahren zur Kohlendioxidreduktion, umfassend:
einen Absorptionsschritt, bei dem ein Kohlendioxid enthaltendes Quellgas mit einer Absorptionsflüssigkeit, die aus einer wässrigen Lösung zusammengesetzt ist, die mindestens eine Aminverbindung enthält, in einem Absorptionsturm (2) in Kontakt gebracht wird, so dass das Kohlendioxid in der Absorptionsflüssigkeit absorbiert wird;
einen Elektrolyseschritt zum Elektrolysieren des im Absorptionsschritt in der Absorptionsflüssigkeit absorbierten Kohlendioxids in einer Elektrolysevorrichtung (3);
einen Zirkulationsschritt zum Zirkulieren der Absorptionsflüssigkeit zwischen dem Absorptionsturm (2) und der Elektrolysevorrichtung (3) über eine Zirkulationsleitung (13/14), wobei die Zirkulationsleitung (13/14) eine Absorptionsflüssigkeitszuleitung (13) umfasst, zum Zuführen der Absorptionsflüssigkeit im Elektrolyseapparat (3) zum Absorptionsturm (2);
einen Absorptionsflüssigkeitssammelschritt zum Zuführen eines Teils der in der Absorptionsflüssigkeitszuleitung (13) zirkulierenden Absorptionsflüssigkeit von der Absorptionsflüssigkeitszuleitung (13) zu einer Verunreinigungsentfernungsvorrichtung (40);
nach dem Elektrolyseschritt ein Verunreinigungsentfernungsschritt zum Entfernen einer Verunreinigung, die eine andere Komponente als die mindestens eine Aminverbindung und Wasser ist, aus der Absorptionsflüssigkeit, die der Elektrolyse unterzogen wird, in der Verunreinigungsentfernungsvorrichtung (40); und
einen Schritt zur Rückführung der Absorptionsflüssigkeit, bei dem der Teil der Absorptionsflüssigkeit, aus dem die Verunreinigung durch die Verunreinigungsentfernungsvorrichtung (40) entfernt wurde, von der Verunreinigungsentfernungsvorrichtung (40) zur Absorptionsflüssigkeitszuleitung (13) zurückgeführt wird.

10. Das Verfahren zur Kohlendioxidreduktion nach Anspruch 9, wobei ein Reduktionsprodukt, das durch Reduzieren des Kohlendioxids durch Elektrolyse des Kohlendioxids im Elektrolyseschritt erhalten wird, Kohlenmonoxid ist.

## Revendications

1. Système de réduction de dioxyde de carbone (1) comprenant :
une colonne d'absorption (2) configurée pour mettre en contact un gaz source contenant du dioxyde de carbone avec un liquide d'absorption composé d'une solution aqueuse contenant au moins un composé amine de sorte que le dioxyde de carbone soit absorbé dans le liquide d'absorption ;
un appareil d'électrolyse (3) pour électrolyser le dioxyde de carbone absorbé dans le liquide d'absorption dans la colonne d'absorption (2) ;
une conduite de circulation (13/14) pour faire circuler le liquide d'absorption entre la colonne d'absorption (2) et l'appareil d'électrolyse (3), dans lequel la conduite de circulation (13/14) comporte une conduite d'alimentation en liquide d'absorption (13) pour alimenter la colonne d'absorption (2) en liquide d'absorption dans l'appareil d'électrolyse (3) ;
un appareil d'élimination d'impuretés (40) pour éliminer une impureté qui est un composé autre que l'au moins un composé amine et l'eau du liquide d'absorption s'écoulant à travers la conduite d'alimentation en liquide d'absorption (13) ;
une conduite de collecte de liquide d'absorption (41) pour fournir une partie du liquide d'absorption circulant dans la conduite d'alimentation en liquide d'absorption (13) depuis la conduite d'alimentation en liquide d'absorption (13) vers l'appareil d'élimination d'impuretés (40) ; et
une conduite de renvoi de liquide d'absorption (42) pour renvoyer la partie du liquide d'absorption à partir duquel l'impureté a été éliminée par l'appareil d'élimination d'impuretés (40) depuis l'appareil d'élimination d'impuretés (40) vers la conduite d'alimentation en liquide d'absorption (13).

2. Système de réduction de dioxyde de carbone (1) selon la revendication 1, dans lequel la colonne d'absorption (2) comporte :
une unité d'absorption (11) pour amener le dioxyde de carbone à être absorbé dans le liquide d'absorption ; et
une unité de nettoyage (12) pour éliminer la vapeur de l'au moins un composé amine contenu dans le gaz source à partir duquel le dioxyde de carbone a été éliminé.

3. Système de réduction de dioxyde de carbone (1) selon la revendication 1 ou 2, dans lequel l'appareil d'élimination d'impuretés (40) est un appareil de séparation par échange d'ions (50), un appareil d'électrodialyse (60), un appareil de séparation gaz-liquide, un appareil de séparation de phases (70), un appareil d'extraction, un appareil de distillation (80), un appareil de séparation par membrane (90) ou un appareil de filtration (100).

4. Système de réduction de dioxyde de carbone (1) selon l'une quelconque des revendications 1 à 3, comprenant en outre une colonne de prétraitement (4) pour réaliser un prétraitement du gaz source avant que le gaz source ne soit introduit dans la colonne d'absorption (2).

5. Système de réduction de dioxyde de carbone (1) selon la revendication 4, dans lequel la colonne de prétraitement (4) comporte une unité de refroidissement de gaz source (32) pour refroidir le gaz source.

6. Système de réduction de dioxyde de carbone (1) selon la revendication 4 ou 5, dans lequel la colonne de prétraitement (4) comporte une unité d'élimination d'oxyde de soufre pour éliminer un oxyde de soufre contenu dans le gaz source.

7. Système de réduction de dioxyde de carbone (1) selon l'une quelconque des revendications 1 à 6, dans lequel au moins l'un de l'au moins un composé amine est une amine primaire ou une amine secondaire.

8. Système de réduction de dioxyde de carbone (1) selon l'une quelconque des revendications 1 à 7, dans lequel un produit de réduction obtenu en réduisant le dioxyde de carbone par électrolyse du dioxyde de carbone dans le dispositif d'électrolyse (3) est le monoxyde de carbone.

9. Procédé de réduction de dioxyde de carbone comprenant :
une étape d'absorption pour mettre en contact un gaz source contenant du dioxyde de carbone avec un liquide d'absorption composé d'une solution aqueuse contenant au moins un composé amine dans une colonne d'absorption (2) de sorte le dioxyde de carbone soit absorbé dans le liquide d'absorption ;
une étape d'électrolyse pour électrolyser le dioxyde de carbone absorbé dans le liquide d'absorption lors de l'étape d'absorption dans un appareil d'électrolyse (3) ;
une étape de circulation pour faire circuler le liquide d'absorption entre la colonne d'absorption (2) et l'appareil d'électrolyse (3) à travers une conduite de circulation (13/14), dans lequel la conduite de circulation (13/14) comporte une conduite d'alimentation en liquide d'absorption (13) pour fournir le liquide d'absorption dans l'appareil d'électrolyse (3) à la colonne d'absorption (2) ;
une étape de collecte de liquide d'absorption pour fournir une partie du liquide d'absorption circulant dans la conduite d'alimentation en liquide d'absorption (13) depuis la conduite d'alimentation en liquide d'absorption (13) vers un appareil d'élimination d'impuretés (40) ;
après l'étape d'électrolyse, une étape d'élimination d'impuretés pour éliminer une impureté qui est un composé autre que l'au moins un composé amine et l'eau du liquide d'absorption soumis à l'électrolyse dans l'appareil d'élimination d'impuretés (40) ; et
une étape de renvoi de liquide d'absorption pour renvoyer la partie du liquide d'absorption à partir duquel l'impureté a été éliminée par l'appareil d'élimination d'impuretés (40) depuis l'appareil d'élimination d'impuretés (40) vers la conduite d'alimentation en liquide d'absorption (13).

10. Procédé de réduction de dioxyde de carbone selon la revendication 9, dans lequel un produit de réduction obtenu en réduisant le dioxyde de carbone par l'électrolyse du dioxyde de carbone à l'étape d'électrolyse est le monoxyde de carbone.
